**Europäisches Patentamt**

**European Patent Office**

**Office européen des brevets**

(11) Veröffentlichungsnummer: **0 131 346**
**A2**

# (12) EUROPÄISCHE PATENTANMELDUNG

(21) Anmeldenummer: **84201023.3**

(22) Anmeldetag: **11.07.84**

(51) Int. Cl.⁴: **G 11 B 15/675**

(30) Priorität: **12.07.83 DE 3325053**

(43) Veröffentlichungstag der Anmeldung:
**16.01.85 Patentblatt 85/3**

(84) Benannte Vertragsstaaten:
**DE FR GB IT**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB IT**

(72) Erfinder: **Hoppmanns, Rolf-Dieter**
**Nassauer Ring 20**
**D-4150 Krefeld(DE)**

(72) Erfinder: **Steup, Walter**
**Neukirchner Strasse 18**
**D-4150 Krefeld(DE)**

(72) Erfinder: **Wieszorek, Willibald**
**Schönwasserstrasse 39**
**D-4150 Krefeld(DE)**

(72) Erfinder: **Beitler, Franz**
**Walkergasse 15a**
**A-1210 Wien(AT)**

(74) Vertreter: **Kupfermann, Fritz-Joachim et al,**
**Philips Patentverwaltung GmbH Billstrasse 80 Postfach**
**10 51 49**
**D-2000 Hamburg 28(DE)**

(54) **Ladevorrichtung an einem Magnetbandkassettengerät.**

(57) Ladevorrichtung an einem Magnetbandkassettengerät mit einer Hebevorrichtung, mittels der eine Kassette (5) um eine zum Wechseln geeignete Position hochfahrbar ist, und mit einer von der Hebevorrichtung anheb- und absenkbaren rahmenartigen Kassettenaufnahme (3). Die Kassettenaufnahme (3) weist einen Auswurfschieber (29) auf, der in einer Einschubstellung mittels einers Klinkenhebels (49) arretierbar ist. Die Arretierung erfolgt mittels eines einen Riegel (69) des Auswurfschiebers (29) in der Einschubstellung arretierenden Klinkenhebels, der aus seiner Arretierstellung wegschwenkbar ist mittels eines an ihm gelagerten Kipphebels (59), der beim Absenken der Kassettenaufnahme (3) funktionslos an einem Auslöseglied (63) vorbeifährt und beim Anheben der Kassettenaufnahme (3) vom Auslöseglied (63) derart verschwenkbar ist, daß er den Klinkenhebel (49) aus der Arretierstellung wegschwenkt. Die Auswurfschieber (29) beiderseits der Kassettenaufnahme (3) sind mittels einer verbindenden Welle (37) sowie Zahnrädern und Zahnstangen miteinander gekuppelt. Auf die Welle (37) wirkt eine Bremsvorrichtung (39) bei Anhebebewegungen der Kassettenaufnahme ein.

./...

Fig.2

Ladevorrichtung an einem Magnetbandkassettengerät


Die Erfindung bezieht sich auf eine Ladevorrichtung an einem Magnetbandkassettengerät mit einer Hebevorrichtung und mit einer von der Hebevorrichtung anheb- und absenkbaren rahmenförmigen Kassettenaufnahme, die einen Auswurfschieber aufweist, der in einer Einschubstellung mittels eines Klinkenhebels arretierbar ist.

Es sind bereits verschiedene Ladevorrichtungen zum Laden und Entladen einer Kassette in einem Magnetbandkassettengerät vorgeschlagen worden. Bei einer derartigen Vorrichtung wird eine Kassette von der Vorderseite des Gerätes in die Kassettenaufnahme eingelegt, nach innen geschoben und mit der Hebevorrichtung in vertikaler Richtung abgesenkt, um sie in die Arbeitsstellung zu bringen.

In der Arbeitsstellung wird die in das Gerät eingeführte Kassette mit Hilfe von Zentrierstiften zentriert. Zur Entnahme hebt die motorgetriebene Kassettenhebevorrichtung die in der Kassettenaufnahme aufgenommene Kassette aus der Arbeitsstellung in die Auswurfstellung.

Die Kassette muß in der Kassettenaufnahme bei dem Absenken in die Arbeitsstellung arretiert sein. Bei der DE-AS 23 57 445 ist eine Ladevorrichtung für ein Magnetbandkassettengerät bekannt, bei dem das Arretieren stattfindet mittels einer sogenannten Shadowklinke, die eine Herzkurve und einen die Herzkurve abfahrenden Stift aufweist. Beim Einschieben einer Kassette von Hand in die Kassettenaufnahme rastet der Stift in der Mulde der Herzkurve, so daß die eingeschobene Kassette in der Einschubstellung arretiert ist. Beim erneuten Eindrücken fährt der Stift wieder aus der Mulde der Herzkurve heraus, und eine Feder bewegt einen Auswurfschieber mit der Kassette in die Auswurfstellung. Hierbei ist es von Nachteil, daß die Kassette immer zum Auswerfen noch einmal angestoßen werden muß.

Es ist Aufgabe der Erfindung, eine Ladevorrichtung an einem Magnetbandkassettengerät zu schaffen, die es ermöglicht, die Verriegelung der Kassette innerhalb der Kassettenaufnahme auf einfache Weise aufzulösen und die Kassette ohne erneutes Anstoßen auszuwerfen.

Die gestellte Aufgabe ist erfindungsgemäß gelöst durch einen einen Riegel des Auswurfschiebers in der Einschubstellung arretierenden Klinkenhebel, der aus seiner Arretierstellung wegschwenkbar ist mittels eines an ihm gelagerten Kipphebels, der beim Absenken der Kassettenaufnahme funktionslos an einem Auslöseglied vorbeifährt und beim Anheben der Kassettenaufnahme vom Auslöseglied derart verschwenkbar ist, daß er den Klinkenhebel aus der Arretierstellung wegschwenkt.

Das Aufheben der Arretierung erfolgt mithin ganz einfach, indem die Bewegungskräfte, die in der Anhebebewegung stecken, zum Auslösen ausgenutzt werden. Dies ist einfach und wirtschaftlich.

Mit Hilfe des Kipphebels und des Auslösegliedes wird bestimmt, in welcher Bewegungsrichtung der Hebevorrichtung der Klinkenhebel aus seiner Arretierstellung bewegt wird und in welcher Richtung nicht. Dies wird nach einer vorteilhaften Ausgestaltung der Erfindung dadurch erreicht, daß der doppelarmig ausgebildete Kipphebel nach Art einer hängenden Wippe ausgebildet ist. Dabei weist der Kipphebel zwei Freiarme auf, von denen der erste Freiarm mit einer Auslösenase eines am Spielergehäuse angeordneten federnden Auslösearmes zusammenwirkt, während der zweite Freiarm beim Entriegeln gegen den Klinkenhebel stößt.

Aus der DE-OS 32 29 490 ist es bekannt, einen Anhebeschieber eines Magnetbandkassettengerätes mittels einer Sperrklinke festzuhalten, wenn die Kassette im Gerät in die Spielstellung abgesenkt ist. Ein Schubzapfen drückt beim Einleiten des Auswerfvorganges die Kopfplatte beiseite, bis der Magnetkopf aus der Kassette herausgefahren ist. Hat der Schubzapfen die Kopfplatte zurückgeschoben, dann wird die Kassette angehoben, nachdem der Schubzapfen beim Weiterbewegen auch die Sperrklinke verschwenkt und damit die Arretierung des Anhebeschiebers gelöst hat. Die Arretierung des Anhebeschiebers in der Absenkstellung hat damit die Aufgabe, das Anheben der Kassette zu verhindern, bevor der Magnetkopf aus der Kassette gezogen wird. Eine Arretierung der Kassette in der Kassettenaufnahme wird damit nicht beeinflußt.

Um die Ladevorrichtung möglichst gedrungen und platzsparend aufzubauen, ist es vorteilhaft, wenn die Arretierung des Auswurfschiebers nur auf einer Seite vorgenommen wird und auf beiden Seiten der Kassettenaufnahme angeordnete Auswurfschieber parallel zueinander arbeiten. Aus diesem Grunde ist nach einer weiteren Ausgestaltung der Erfindung vorgesehen, daß die beiderseits der Kassettenaufnahme angeordneten Auswurfschieber mit Zahnstangen versehen sind, die mit Zahnrädern kämmen, die über eine Welle miteinander verbunden sind. Die Auswurfschieber auf beiden Seiten der Kassettenaufnahme arbeiten auf diese Weise streng miteinander gekoppelt parallel.

Da die Kassette nunmehr ohne Zutun von Hand ausgeworfen wird, ist es erforderlich, daß die Auswurfbewegung gebremst wird, um die Kassette nicht aus dem Gerät herauszukatapultieren. Um dies sicherzustellen, ist nach einer weiteren Ausgestaltung der Erfindung vorgesehen, daß die Drehbewegung der Welle bei Anhebebewegungen mittels einer Bremsvorrichtung abbremsbar ist. Im einzelnen ist dazu vorgesehen, daß auf der Welle eine Bremshülse angeordnet ist, die mit einer Ratschenvorrichtung versehen ist, die die Bremshülse gegen Drehbewegungen arretiert, wenn sich die Kassettenaufnahme anhebt, und daß ein Bremsmedium zwischen der arretierten Bremshüle und der Welle die Wellendrehbewegung bremst. Dabei besteht die Ratschenvorrichtung aus einem Ratschenzahnrad und einem auf das Ratschenzahnrad einwirkenden Ratschenfederblatt.

Die Erfindung wird anhand des in der Zeichnung dargestellten Ausführungsbeispieles näher erläutert. Es zeigen:

Fig. 1 bei einem Magnetbandkassettengerät die mittels einer Kassettenaufnahme in eine Arbeitsstellung gebrachte Kassette zusammen mit der zugehörigen Ladevorrichtung,

Fig. 2 die Ladevorrichtung nach Fig. 1 bei angehobener Kassettenaufnahme,

Fig. 3 und 4 eine Auswurfverriegelungsvorrichtung des Gerätes in der Bewegungsphase der Entriegelung bzw. in der Stellung der Verriegelung,

Fig. 5 die Ladevorrichtng nach Fig. 1 bei einer Funktionsphase bei herausgefahrener Kassette und

Fig. 6 eine Draufsicht auf die Ladevorrichtung nach Fig. 1
mit herausgestellter Bremsvorrichtung für den Auswurf.

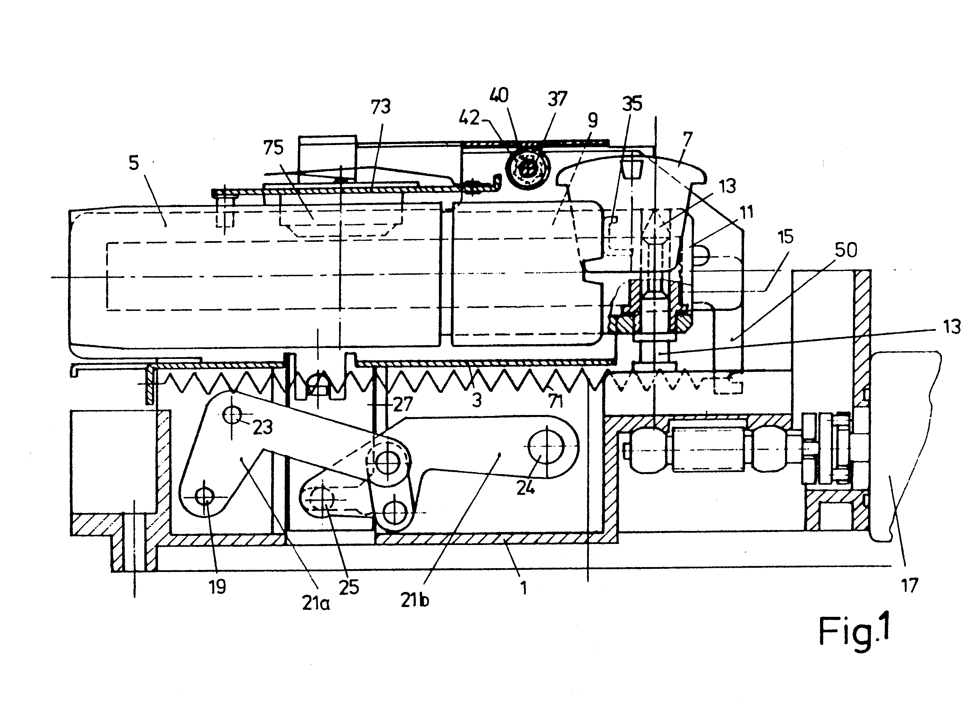

In einem Gehäuse 1 eines Magnetbandkassettengerätes befindet sich eine Ladevorrichtung mit einer Kassettenaufnahme 3, in die eine Kassette 5 eingeschoben ist. Bei dem Ausführungsbeispiel handelt es sich um eine Video-Kassette mit einem wegschwenkbaren Verschlußdeckel 7 und einem auf dem Kassettengehäuse zurückschiebbaren Kassettenschieber 9. Bei der Darstellung nach Fig. 1 sind in den Kassettenkopf 11 Zentrierstifte 13 eingeschoben. Auf diese Weise ist die Kassette 5 in ihrer Arbeitsspiellage im Gerät festgelegt. Das Video-Band 15 ist in der Arbeitsstellung mittels einer nicht dargestellten Ein- und Ausfädelmechanik um eine nicht dargstellte Kopftrommel mit einer rotierbaren Kopfscheibe gezogen. Die Ein- und Ausfädelmechanik sind nicht näher beschrieben, da sie im hier betrachteten Zusammenhang ohne Bedeutung sind.

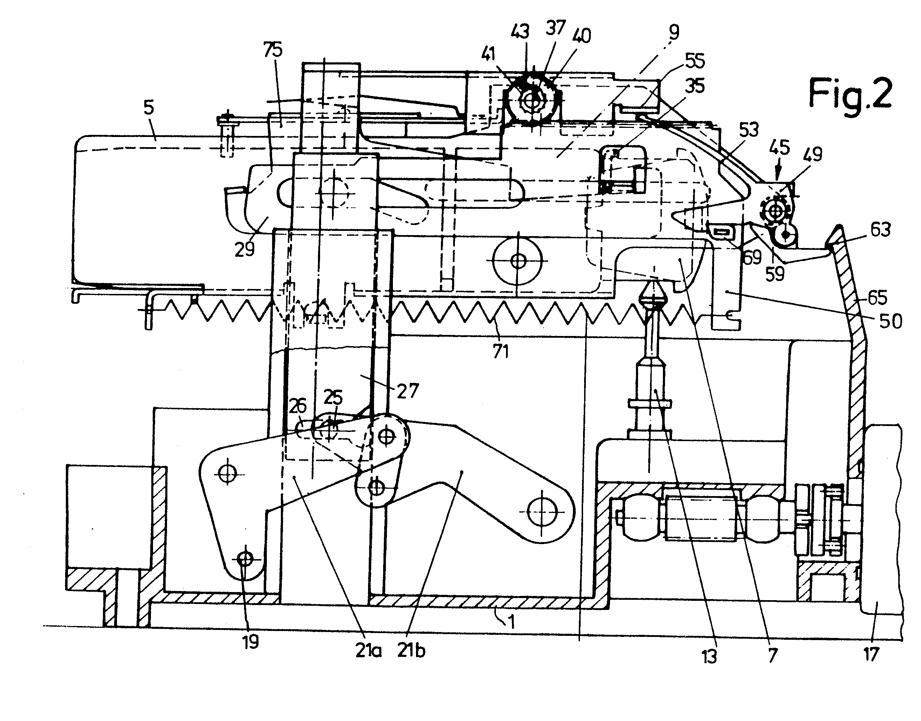

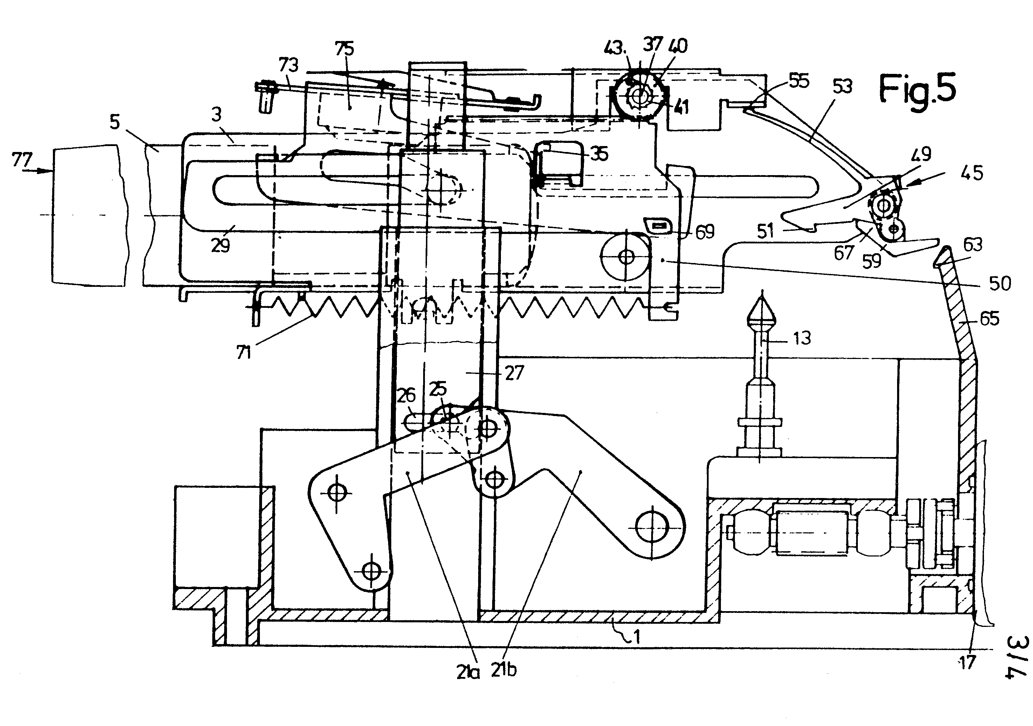

Die Kassettenaufnahme 3 kann mit Hilfe einer Hebevorrichtung aus der Spielstellung nach Fig. 1 in eine Auswurf- und Einzugstellung nach Fig. 2 verschoben werden. Diese Hebevorrichtung besteht aus einem Steuermotor 17, der eine nicht dargestellte Steuerscheibe antreibt. Eine Kontur dieser nicht dargestellten Steuerscheibe wird von einem gleichfalls nicht dargestellten Fühlhebel mittels eines Fühlstiftes abgefahren. Eine zwischen dem Fühlstift und dem Drehpunkt des Fühlhebels gelenkig angebrachte Stellstange greift mit ihrem anderen Ende an einen Lifthebel an, und zwar zwischen seinem Schwenklager und einem freien Ende. Das freie Ende dieses Lifthebels greift mit einem Liftstift 19 an zwei Hubhebeln 21a und 21b an, die um Drehpunkte 23, 24 schwenkbar sind. Das Gelenksystem aus den beiden miteinander gekuppelten Hubhebeln 21a und 21b greift mit einem Hubstift 25 in Nuten 26 von Hubstangen 27 ein.

Der Steuermotor 17 kann somit über die nicht dargestellte Steuerscheibe und die Hubhebel 21a und 21b sowie die Hubstangen 27 die Kassettenaufnahme 3 anheben. Dabei ziehen sich die Zentrierstifte 13 aus der Kassette heraus, wie dies aus Fig. 2 zu erkennen ist und wodurch ein Auswurf der Kassette 5 möglich ist.

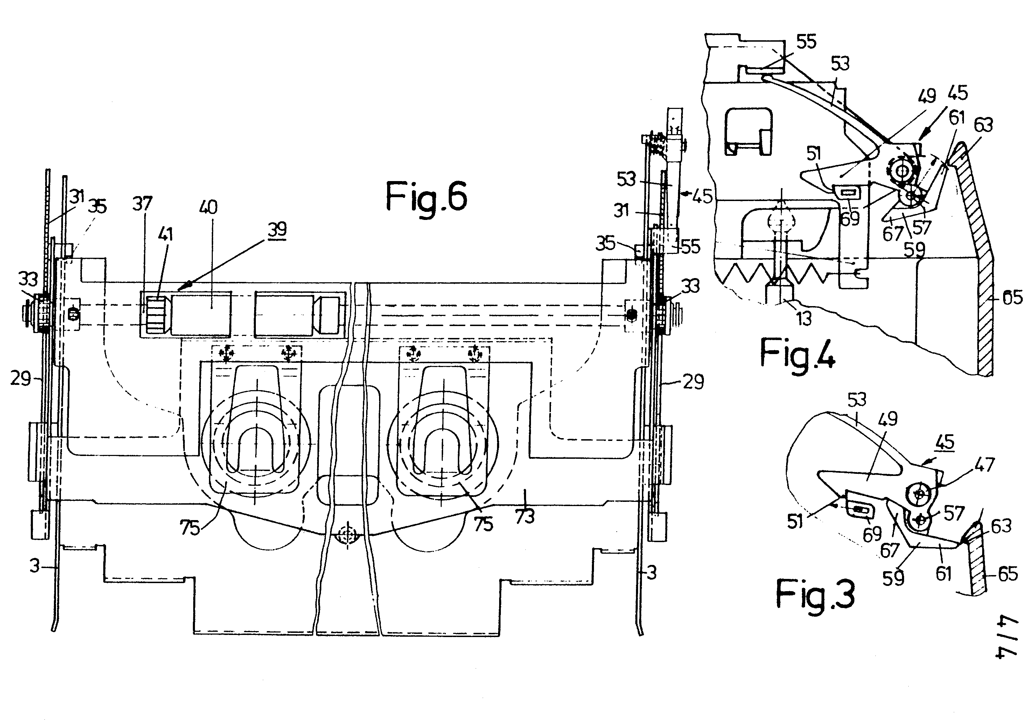

Beiderseits der rahmenförmigen Kassettenaufnahme 3 sind Schieber 29 angeordnet, die in Auswurfrichtung hin und her verfahrbar sind. Aus Fig. 6 ist zu erkennen, daß die beiden Schieber 29 mit Zahnungen 31 versehen sind, die mit Zahnrädern 33 kämmen. Die Schieber 29 greifen mittels Mitnehmerzapfen 35 in den Innenraum der Kassettenaufnahme 3 ein und können dabei hinter den Kassettenschieber 9 greifen, wie aus Fig. 2 zu ersehen ist. Die Zahnräder 33 sind über eine Welle 37 miteinander verbunden (Fig. 6).

Auf der Welle 37 ist eine Reibungsbremse 39 angeordnet, die aus einer Bremshülse 40 und einem an der Bremshülse 40 angeordneten Ratschenzahnrad 41 besteht. Mit dem Ratschenzahnrad 41 wirkt ein Ratschenfederblatt 43 zusammen (Fig. 2), das eine Drehung der Bremshülse 40 nur in einer Richtung zuläßt. Zwischen der Welle 37 und der Bremshülse 40 befindet sich ein bremsendes zähflüssiges Fett, beispielsweise Siliconfett.

An der Kassettenaufnahme 3 ist eine in den Fig. 2, 3 und 4 näher gezeigte Riegelvorrichtung 45 vorgesehen. Diese Riegelvorrichtung besteht aus einem um eine Achse 47 verschwenkbaren Klinkenhebel 49, der mit einer Ausklinkung 51 versehen ist. Der Klinkenhebel 49 besteht aus Kunststoff und ist mit einem angespritzten Federarm 53 ausgerüstet, der hinter eine Nase 55 der Kassettenaufnahme 3 drücken kann. Um eine neben der Achse 47 gelegene weitere Achse 57 ist ein doppelarmiger Kipphebel 59 verschwenkbar. Dieser Kipphebel nach Art einer hängenden Wippe kann, wenn er mit einem ersten Freiarm 61 gegen eine Auslösenase 63 eines Auslösearmes 65 stößt, den Klinkenhebel 49 so weit verschwenken, daß ein zweiter Freiarm 67 den Klinkenhebel 49 nach oben drückt. Dadurch wird ein Riegel 69 freigegeben, und an Zughaken 50 der Schieber 29 angreifende Zugfedern 71 ziehen die Schieber 29 zusammen mit der Kassette 5 nach links aus der Kassettenaufnahme 3 heraus. Das Ende dieser Verschiebestellung ist aus Fig. 5 zu erkennen, wobei die Kassette 5 weit aus der Kassettenaufnahme 3 herausgeschoben ist. Zusammen mit dem Nach-links-Verschieben der Schieber 29 ist auf nicht näher zu erläuternde Weise eine Andruckplatte 73 verschwenkt, so daß Andrücker 75 aus der Kassette herausgehoben wurden.

Beim Niederfahren der Kassettenaufnahme 3 stößt der erste Freiarm 61 wieder gegen die Auslösenase 63. Bei dieser Niederfahrbewegung kippt der Kipphebel 59 aber einfach weg, und der Klinkenhebel 49 wird nicht berührt.

Die Funktionsweise beim Beladen des Kassettengerätes ist nun wie folgt. In der Darstellung nach Fig. 5 wird in Richtung eines Pfeiles 77 die Kassette 5 nach rechts in die Kassettenaufnahme 3 eingeschoben. Das Einschieben ist beendet, wenn der Riegel 69 hinter der Ausklinkung 51 des Klinkenhebels 49 verrastet ist. Dieses Einschieben erfolgt bei dem Ausführungsbeispiel vollständig von Hand. Danach fährt die Kassettenaufnahme 3 nieder in die Stellung nach Fig. 1. Der Kipphebel 59 fährt an der Auslösenase 63 vorbei, und die Kassette 5 bleibt eingeschoben arretiert gehalten. Beim Niederfahren ist das Ratschenfederblatt 43 über die Zähne des Ratschenzahnrades 41 hinweggestrichen. Die Reibungsbremse 39 lief bei dieser Niederdrückbewegung also leer.

Ist die Kassette abgespielt und soll sie ausgeworfen werden, dann wird durch Betätigung des Steuermotors 17 die Kassettenaufnahme 3 angehoben. Beim Anheben stößt der erste Freiarm 61 gegen die Auslösenase 63, und der zweite Freiarm 67 kippt den Klinkenhebel 49 nach oben. Der nun frei gewordene Riegel 69 erlaubt es, daß die Feder 71 die Kassette 5 mittels der Feder 71 auswirft. Diese Auswerfbewegung ist dadurch gebremst, daß nunmehr das Ratschenfederblatt 43 gegen einen Zahn des Ratschenzahnrades 41 stößt. Damit ist die Bremshülse 40 blockiert, und die Welle 37 wird mittels des Fettes zwischen der Bremshülse 40 und der Welle 37 abgebremst. Der Auswerfvorgang läuft damit stark gebremst ab.

## PATENTANSPRÜCHE

1. Ladevorrichtung an einem Magnetbandkassettengerät mit einer Hebevorrichtung und mit einer von der Hebevorrichtung anheb- und absenkbaren rahmenförmigen Kassettenaufnahme, die einen Auswurfschieber aufweist, der in einer Einschubstellung mittels eines Klinkenhebels arretierbar ist, gekennzeichnet durch einen einen Riegel (69) des Auswurfschiebers (29) in der Einschubstellung arretierenden Klinkenhebel (49), der aus einer Arretierstellung wegschwenkbar ist mittels eines an ihm gelagerten Kipphebels (59), der beim Absenken der Kassettenaufnahme (3) funktionslos an einem Auslöseglied (63) vorbeifährt und beim Anheben der Kassettenaufnahme (3) vom Auslöseglied (63) derart verschwenkbar ist, daß er den Klinkenhebel (49) aus der Arretierstellung wegschwenkt.

2. Ladevorrichtung nach Anspruch 1, dadurch gekennzeichnet, daß der doppelarmig ausgebildete Kipphebel (59) nach Art einer hängenden Wippe ausgebildet ist.

3. Ladevorrichtung nach den Ansprüchen 1 und 2, dadurch gekennzeichnet, daß der Kipphebel (59) zwei Freiarme (61, 67) aufweist, von denen der erste Freiarm (61) mit einer Auslösenase (63) eines am Gerätegehäuse angeordneten federnden Auslösearmes zusammenwirkt, während der zweite Freiarm (67) beim Entriegeln gegen den Klinkenhebel (49) stößt.

4. Ladevorrichtung nach Anspruch 1, dadurch gekennzeichnet, daß die beiderseits der Kassettenaufnahme angeordneten Auswurfschieber (29) mit Zahnstangen (31) versehen sind, die mit Zahnrädern (33) kämmen, die über eine Welle (37) miteinander verbunden sind.

5. Ladevorrichtung nach den Ansprüchen 1 bis 4, dadurch gekennzeichnet, daß die Drehbewegung der Welle (37) bei Anhebebewegungen mittels einer Bremsvorrichtung (39) abbremsbar ist.

6. Ladevorrichtung nach Anspruch 5, dadurch gekennzeichnet, daß auf der Welle (37) eine Bremshülse (40) angeordnet ist, die mit einer Ratschenvorrichtung (41, 43) versehen ist, die die Bremshülse gegen Drehbewegungen arretiert, wenn sich die Kassettenaufnahme (3) anhebt, und daß ein Bremsmedium zwischen der arretierten Bremshülse (40) und der Welle (37) die Wellendrehbewegung bremst.

7. Ladevorrichtung nach Anspruch 6, dadurch gekennzeichnet, daß die Ratschenvorrichtung aus einem Ratschenzahnrad und einem auf das Ratschenzahnrad (41) einwirkenden Ratschenfederblatt (43) besteht.

8. Ladevorrichtung nach den Ansprüchen 1 bis 3, dadurch gekennzeichnet, daß der Klinkenhebel (49) mit einer federnden Zunge (53) versehen ist, die sich mit ihrem freien Ende an der Kassettenaufnahme (3) abstützt und den Klinkenhebel (49) in seine Arretierstellung drückt.

Fig.1

Fig.2

Fig.5

Fig.3

Fig.4

Fig.6